# EUROPÄISCHE PATENTSCHRIFT

(11) **EP 1 022 607 B1**
(45) Veröffentlichungstag und Bekanntmachung des Hinweises auf die Patenterteilung: **08.09.2004**
(21) Anmeldenummer: 00101074.3
(22) Anmeldetag: 20.01.2000
(51) Int. Cl.: G03B 15/06

(54) **Lichtreflektoranordnung**
Mirror assembly
Structure d'assemblage pour miroir

(30) Priorität: 21.01.1999 DE 29900991 U
(43) Veröffentlichungstag der Anmeldung: 26.07.2000
(73) Patentinhaber: Strobel, Markus, 80638 München (DE)
(72) Erfinder: Strobel, Markus, 80638 München (DE)
(74) Vertreter: Prietsch, Reiner, Dipl.-Ing.

(56) Entgegenhaltungen:
- CH-A- 645 735
- DE-C- 4 445 302
- US-A- 2 968 033
- US-A- 4 460 946
- US-A- 5 347 402
- US-A- 5 579 180

## Beschreibung

Die Erfindung betrifft eine Lichtreflektoranordnung, insbesondere für Foto-, Film- und Videoaufnahmen, mit den im Oberbegriff des Anspruches 1 angegebenen Merkmalen.

Eine derartige Lichtreflektoranordnung ist aus der US 4 460 946 bekannt. Sie umfasst eine zentrale, reflektierend ausgebildete Befestigungsplatte, an welcher mittels einer Gegenplatte bis zu vier reflektierende Platten durch Klemmung festlegbar sind. Die Platten haben rückseitig Aussteifungsrippen und einen umlaufend verdickten Rand sowie Zungen und Ausnehmungen, die im montierten Zustand kammartig ineinander greifen. Die Herstellung dieser Platten ist deshalb aufwendig. In ihrer zur Verminderung des Gewichts bevorzugten Ausführung aus Hartschaum ist trotz der Profilierung eine ausreichende Widerstandsfähigkeit beim Transport, beim Zusammensetzen und zerlegen sowie beim Einsatz im Freien gegenüber Windkräften nicht gewährleistet.

Bekannt sind auch faltbare Lichtreflektoren aus metallisiertem Gewebe. Diese weisen eine geringe Biegefestigkeit auf und sind mithin, da eine hohe Formstabilität Voraussetzung für eine stabile, gleichbleibende Aufhellung des aufzunehmenden Objektes ist, zur Verwendung im Freien, wo ein Reflektor bisweilen extremen Wind- und Wettereinflüssen ausgesetzt ist, nur bedingt geeignet.

Aus der DE-C-44 45 302 ist ein Leichtspiegel bekannt, der aus einer einzigen Platte, einer mit Metall bedampften Folie und aus einen umlaufenden Rahmen bildenden U-Profilen besteht. Die U-Profile haben eine Querschenkelverlängerung, über die als Reflektor eine metallisierte Polyesterfolie durch Warmschrumpfen gespannt ist. Dieser nichtzerlegbare Lichtreflektor ist aufgrund seiner Abmessungen für den raschen, mobilen Einsatz wenig geeignet.

Der Erfindung liegt die Aufgabe zugrunde, eine Lichtreflektoranordnung der einleitend angegebenen Gattung zu schaffen, deren Teile, zusammengesetzt, einen wind- und wetterfesten, mithin biegefesten Lichtreflektor für den raschen, mobilen Einsatz ergeben.

Diese Aufgabe ist erfindungsgemäß durch die im Patentanspruch angegebenen Merkmale gelöst. Die Profilleisten können beispielsweise U-Profilleisten aus Aluminium sein, das leicht, formstabil und reflektierend ist.

Die vorgeschlagene Lichtreflektoranordnung bildet ein variabel ausbaubares Modulsystem. Im zusammengesetzten Zustand hat der Lichtreflektor aufgrund seiner Plattenbauweise eine hohe Biegefestigkeit und ist deshalb auch für den Einsatz unter extremen Bedingungen im Freien geeignet, leicht zerlegbar und bequem zu transportieren.

Vorteilhaft ist das Reflexionsvermögen der beiden Plattenseiten unterschiedlich (Anspruch 2). Dies läßt sich beispielsweise durch das Aufkaschieren reflektierender Folien mit jeweils unterschiedlicher Reflexionscharakteristik erreichen. Der Lichtreflektor bietet so vielfältige Einsatzmöglichkeiten.

Die U-Profilabschnitte können formschlüssig aufsteckbar (Anspruch 3) oder an einem Ende an einer der Platten schwenkbar angelenkt sein (Anspruch 4).

Gemäß einer bevorzugten Ausführungsform hat jede Platte in jedem ihrer Ränder im Bereich jeder Ecke eine Bohrung und jeder U-Profilabschnitt hat zwei Bohrungen, wobei der Abstand letzterer gleich dem doppelten Abstand der Bohrungen der Platten von deren nächstgelegenen Ecke ist, so daß durch die somit fluchtenden Bohrungen der Platten und der U-Profilabschnitte Sicherungssplinte hindurchsteckbar sind (Anspruch 5).

Die Verbindung zwischen aneinandergrenzenden Platten kann auch einen Spannhebelverschluß umfassen (Anspruch 6).

Zur Verbindung von vier oder mehr Platten können im Zentrum bzw. dort, wo die Ecken von jeweils vier Platten zusammentreffen, zwei Metallplatten, zwischen denen die Platteneckbereiche liegen und die miteinander verspannbar sind, als zentrales Verbindungsmittel angeordnet werden (Anspruch 7).

Zweckmäßig sind alle Plattenecken abgeschrägt und die Metallplatten über einen zentralen Schraubbolzen verspannbar (Anspruch 8). Infolge der Abschrägung bleibt unabhängig von der Orientierung der einzelnen Platte, dort, wo die Ecken von jeweils vier Platten zusammenstoßen, stets eine Öffnung für den Durchtritt des zentralen Schraubbolzens frei.

Bevorzugt hat die eine Metallplatte acht Stifte, die bei vier zusammentreffenden Plattenecken die entsprechenden acht Bohrungen in den Rändern der Platten durchgreifen und die andere Metallplatte hat mit den Stiften fluchtende Löcher (Anspruch 9).

Zweckmäßig hat mindestens eine der Metallplatten ein Mittel zur Verbindung mit dem Kopf eines Stativs und/oder zur Anbringung weiterer Zubehörteile (Anspruch 13).

Ein Ausführungsbeispiel nach der Erfindung ist in der Zeichnung schematisch vereinfacht dargestellt. Es zeigt:
- Fig. 1: eine Aufsicht auf eine Lichtreflehtoranordnung nach der Erfindung,
- Fig. 2: einen Schnitt längs der Linie II-II in Fig. 1 und
- Fig. 3: das zentrale Verbindungsmittel der den Lichtreflektor nach Fig. 1 bildenden Platten.

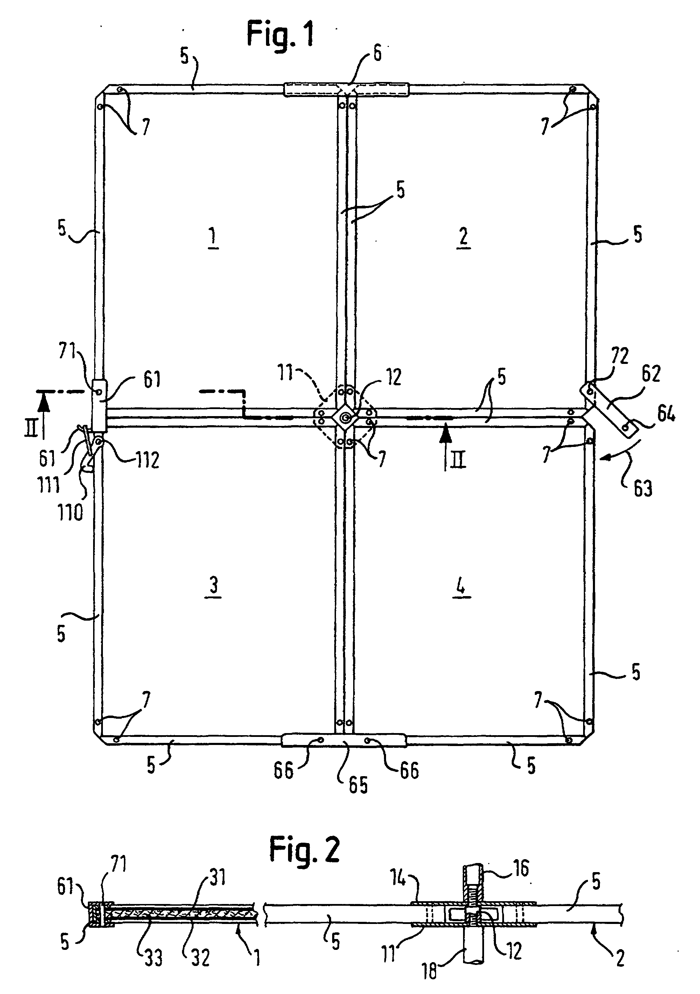

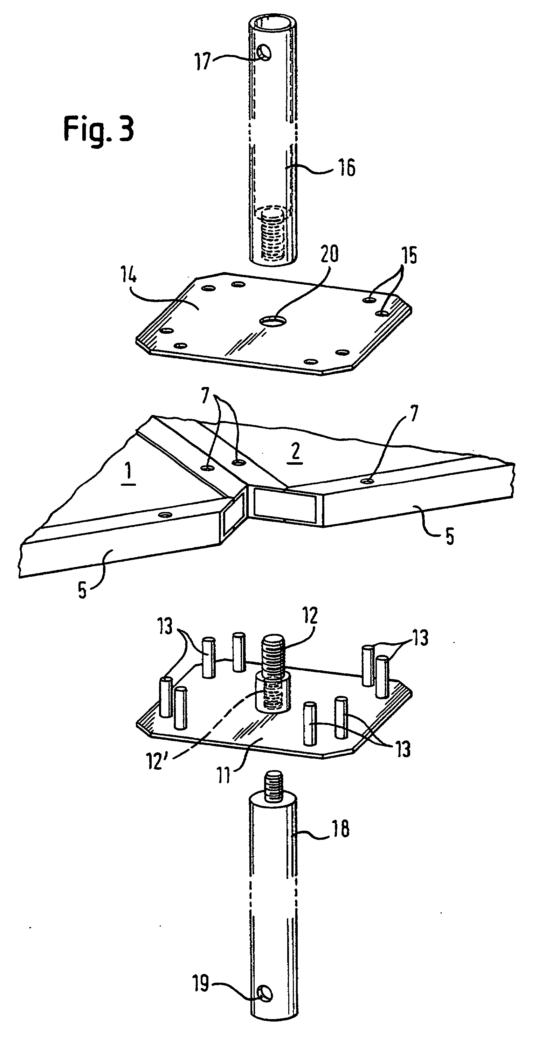

Gemäß Figur 1 besteht die Lichtreflehtoranordnung aus vier rechteckigen Platten 1, 2, 3, 4. Wie der Schnitt in Fig. 2 veranschaulicht, besteht jede der Platten 1, 2, 3, 4 ihrerseits aus einer Hartschaumplatte 33, auf die beidseitig eine reflektierende Folie 31, 32 aufkaschiert ist. Das Reflexionsvermögen der Folien 31 und 32 kann unterschiedlich sein. Die Platten 1, 2, 3, 4 haben beispielsweise Abmessungen von 60 x 80 cm und eine Dicke von 1 cm.

Alle Platten 1, 2, 3, 4 sind symmetrisch zu ihrer jeweiligen Ecke mit je einer Bohrung 7 in jedem der Schenkel der Profilleisten 5 versehen und haben unter 45° abgeschrägte Ecken.

Jede der Platten 1, 2, 3, 4 hat einen Rahmen aus U-Profilleisten 5. Diese können auf die jeweilige Platte formschlüssig aufgeschoben, aufgeklebt oder in anderer Weise befestigt sein. Jeder Rahmen kann aus einer durchgehenden, an den Ecken abgewinkelten Profilleiste 5 oder aus vier einzelnen Profilleistenschenkeln bestehen.

Die außenliegenden Ränder der Platten sind über U-Profilabschnitte miteinander verbunden. Figur 1 veranschaulicht vier unterschiedliche Ausführungsformen. Die Platte 1 ist mit der Platte 2 über einen U-Profilabschnitt 6 verbunden, die lediglich formschlüssig auf die betreffenden Schenkel der Profilleisten 5 aufgeschoben ist. Mit der Platte 3 ist die Platte 1 über einen U-Profilabschnitt 61 verbunden, der bei 71 an den betreffenden Schenkel der Profilleiste 5 angelenkt ist. An seinem anderen Ende hat der U-Profilabschnitt 61 einen kurzen Bügel 61' in den der lange, gabelförmige Bügel 111 eines Spannhebels 110 eingreift, der seinerseits bei 112 an dem betreffenden Schenkel der Profilleiste 5 der Platte 3 angelenkt ist. Die Platte 2 ist mit der Platte 4 demgegenüber einfacher über einen U-Profilabschnitt- 62 verbunden, der bei 72 an dem betreffenden Schenkel 5 angelenkt und in Richtung des Pfeils 63 schwenkbar ist. Der U-Profilabschnitt 62 hat eine Bohrung 64, die in der eingeschwenkten Stellung mit einer Bohrung 7 in der Profilleiste 5 der Platte 4 fluchtet. Durch diese Bohrungen 64 und 7 kann ein Sicherungsbolzen, ein Splint oder dergleichen hindurchgesteckt werden. Die Platten 3 und 4 sind über einen U-Profilabschnitt 65 verbunden, der zwei Bohrungen 66 hat, die mit entsprechenden, hier verdeckten Bohrungen in den betreffenden Schenkeln der Profilleisten 5 fluchten und zur Aufnahme von Sicherungssplinten dienen, die in unterschiedlichen Ausführungsformen im Stand der Technik bekannt und deshalb nicht dargestellt sind.

Im Zentrum der Lichtreflehtoranordnung stoßen die vier abgeschrägten Ecken der Platten 1, 2, 3, 4 zusammen. Insbesondere die Explosionsdarstellung in Figur 3 zeigt, wie die Platten im Zentrum miteinander verbunden sind. Zur Verbindung dienen zwei Metallplatten 11, 14. Die untere Metallplatte 11 ist in Fig. 1 gestrichelt angedeutet. Sie trägt in der Mitte einen zentralen Gewindebolzen 12. Außerdem hat die untere Metallplatte 11 insgesamt acht Stifte 13, die zu den Bohrungen 7 in den vier Eckbereichen der Platten 1, 2, 3, 4 fluchten. Die obere Metallplatte 14 hat acht Löcher 15, die mit den Stiften 13 und den Bohrungen 7 fluchten. Außerdem hat die obere Metallplatte 14 ein Mittelloch 20 für den Durchtritt des Gewindebolzens 12. Die obere Metallplatte 14 wird durch Aufdrehen einer Gewindehülse 16 auf den Gewindebolzen 12 mit der unteren Metallplatte 11 verspannt. Die Gewindehülse 16 hat ein Querloch 17 das zur Befestigung des Lichtreflektors auf dem Kopf eines nicht dargestellten Statives dienen kann.

Der Gewindebolzen 12 hat seinerseits eine Gewindebohrung 12' zum Eindrehen eines Schraubbolzens 18, der ein Querloch 19 hat und alternativ zur Befestigung der Lichtreflehtoranordung auf dem Kopf eines Stativs dienen kann.

## Patentansprüche

1. Lichtreflektoranordnung, insbesondere für Foto-, Film- und Videoaufnahmen, bestehend aus vorzugsweise rechteckigen, zumindest einseitig reflektierenden Platten (1, 2, 3, 4) gleicher Größe, die stumpf aneinander setzbar und miteinander verbindbar sind, **dadurch gekennzeichnet, daß** jede Platte (1, 2, 3, 4) einen Rahmen aus Profilleisten (5) hat und daß die Verbindung zwischen aneinander grenzenden Platten aus U-Profilabschnitten (6, 61, 62, 65) besteht, die über die Ränder der aneinandergrenzenden Platten schiebbar sind und den Stoß überbrücken.

2. Lichtreflektoranordnung nach Anspruch 1, **dadurch gekennzeichnet, daß** das Reflexionsvermögen der beiden Plattenseiten unterschiedlich ist.

3. Lichtreflektoranordnung nach Anspruch 1 oder 2, **dadurch gekennzeichnet, daß** die U-Profilabschnitte (6, 61, 62, 65) auf die jeweiligen Profilleisten (5) formschlüssig aufsteckbar sind.

4. Lichtreflektoranordnung nach einem der Ansprüche 1 bis 3, **dadurch gekennzeichnet, daß** die U-Profilabschnitte (61, 62) an einem ihrer Enden an einer der Platten schwenkbar angelenkt (bei 71, 72) sind.

5. Lichtreflektoranordnung nach einem der Ansprüche 1 bis 4, **dadurch gekennzeichnet, daß** jede Platte (1, 2, 3, 4) in jedem ihrer Ränder im Bereich jeder Ecke eine Bohrung (7) und jeder U-Profilabschnitt (65) zwei Bohrungen (66) hat, wobei der Abstand letzterer gleich dem doppelten Abstand der Bohrung (7) der Platten von deren nächstgelegener Ecke ist, so daß durch die somit fluchtenden Bohrungen (66, 7) der Platten und der U-Profilabschnitte Sicherungssplinte hindurchsteckbar sind.

6. Lichtreflektoranordnung nach einem der Ansprüche 1 bis 5, **dadurch gekennzeichnet, daß** die Verbindung zwischen aneinandergrenzenden Platten (1, 2, 3, 4) mindestens einen Spannhebelverschluß (110, 111, 112) umfaßt.

7. Lichtreflektoranordnung nach einem der Ansprüche 1 bis 6, **dadurch gekennzeichnet, daß** zur Verbindung der Platten (1, 2, 3, 4) im Zentrum bzw. dort, wo die Ecken von jeweils vier Platten zusammentreffen, zwei Metallplatten (11, 14) angeordnet sind, zwischen denen die Platteneckbereiche liegen und die miteinander verspannbar sind.

8. Lichtreflektoranordnung nach Anspruch 7, **dadurch gekennzeichnet, daß** die Platten (1, 2, 3, 4) an allen Ecken abgeschrägt sind und daß die Metallplatten (11, 14) über einen zentralen Gewindebolzen (12) und eine Gewindehülse (16) miteinander verspannbar sind.

9. Lichtreflektoranordnung nach Anspruch 7 oder 8, **dadurch gekennzeichnet, daß** die eine Metallplatte (11) acht Stifte (13) hat, die bei vier zusammentreffenden Plattenecken die entsprechenden acht Bohrungen (7) in den Rändern der Platten (1, 2, 3, 4) durchgreifen und daß die andere Metallplatte (14) mit den Stiften (13) fluchtende Löcher (15) hat.

10. Lichtreflektoranordnung nach einem der Ansprüche 7 bis 9, **dadurch gekennzeichnet, daß** mindestens eine der Metallplatten (11, 14) ein Mittel (16, 17; 18, 19) zur Verbindung mit dem Kopf eines Stativs und/oder zur Anbringung weiterer Zubehörteile hat.

## Claims

1. A light reflector arrangement, especially for photographic, cinematographic and video recordings, consisting of preferably rectangular plates (1, 2, 3, 4) of similar size which reflect at least on the one side and can be placed in an abutting manner against each other and can be joined to each other, **characterized in that** each plate (1, 2, 3, 4) comprises a frame made of profile strips (5) and that the connection between mutually adjacent plates consists of U-profile sections (6, 61, 62, 65) which can be pushed over the edges of mutually adjacent plates and bridge the joint.

2. A light reflector arrangement as claimed in claim 1, **characterized in that** the reflection capability of the two plate sides is different.

3. A light reflector arrangement as claimed in claim 1 or 2, **characterized in that** the U-profile sections (6, 61, 62, 65) are insertable in a positive-locking way into the respective profile strips (5).

4. A light reflector arrangement as claimed in one of the claims 1 to 3, **characterized in that** the U-profile sections (61, 62) are pivotably linked at one of their ends to one of the plates (at 71, 72).

5. A light reflector arrangement as claimed in one of the claims 1 to 4, **characterized in that** each plate (1, 2, 3, 4) comprises in each of its edges in the region of each corner one bore (7) and of each U-profile section (65) two bores (66), with the distance of the latter being equal to twice the distance of the bore (7) of the plates from their next corner, so that securing linch pins can be inserted as a result of the thus aligned bores (66, 7) of the plates and the U-profile sections.

6. A light reflector arrangement as claimed in one of the claims 1 to 5, **characterized in that** the connection between mutually adjacent plates (1, 2, 3, 4) comprises at least one clamping lever lock (110, 111, 112).

7. A light reflector arrangement as claimed in one of the claims 1 to 6, **characterized in that** for the purpose of joining the plates (1, 2, 3, 4) in the center or at locations where the corners of four plates meet two metal plates (11, 14) are arranged between which the corner regions of the plates are situated and can be clamped with each other.

8. A light reflector arrangement as claimed in claim 7, **characterized in that** the plates (1, 2, 3, 4) are beveled at all corners and that the metal plates (11, 14) can be clamped with each other via a central threaded bolt (12) and a threaded bush (16).

9. A light reflector arrangement as claimed in claim 7 or 8, **characterized in that** the one metal plate (11) comprises eight pins (13) which in the case of four meeting plate corners penetrate the respective eight bores (7) in the edges of the plates (1, 2, 3, 4) and that the other metal plate (14) with the pins (13) has aligned holes (15).

10. A light reflector arrangement as claimed in one of the claims 7 to 9, **characterized in that** at least one of the metal plates (11, 14) comprises a means (16, 17; 18, 19) for joining with the head of a tripod and/or for the attachment of further accessories.

## Revendications

1. Disposition de réflecteurs d'éclairage, en particulier pour des prises de vue de photo, de film ou de vidéo, composée de plaques (1, 2, 3, 4) de préférence rectangulaires, réfléchissantes au moins sur une face et de même taille, qui peuvent être posées bout à bout et reliées entre elles, **caractérisée en ce que** chaque plaque (1, 2, 3, 4) possède un cadre fait de bandes profilées (5) et **en ce que** l'assemblage entre des plaques contiguës se compose de sections de profilé en forme de U (6, 61, 62, 65) qui peuvent être enfilées par-dessus les bords des plaques contiguës et fermer le joint d'aboutement.

2. Disposition de réflecteurs d'éclairage selon la revendication 1, **caractérisée en ce que** le pouvoir réfléchissant des deux faces des plaques est différent.

3. Disposition de réflecteurs d'éclairage selon la revendication 1 ou 2, **caractérisée en ce que** les sections de profilé en forme de U (6, 61, 62, 65) peuvent être emboîtées par engagement positif sur les bandes profilées (5) correspondantes.

4. Disposition de réflecteurs d'éclairage selon l'une quelconque des revendications 1 à 3, **caractérisée en ce que** les sections de profilé en forme de U (61,62) sont articulées de manière pivotante (en 71, 72) à l'une de leurs extrémités sur l'une des plaques.

5. Disposition de réflecteurs d'éclairage selon l'une quelconque des revendications 1 à 4, **caractérisée en ce que** chaque plaque (1, 2, 3, 4) possède un trou (7) dans chacun de ses bords au niveau de chaque angle et chaque section de profilé en forme de U (65) deux trous (66), la distance entre ces derniers étant égale au double de la distance entre le trou (7) des plaques et le coin le plus proche, de sorte que des goupilles de retenue peuvent être passées à travers les trous (66, 7) ainsi alignés des plaques et des sections de profilé en forme de U.

6. Disposition de réflecteurs d'éclairage selon l'une quelconque des revendications 1 à 5, **caractérisée en ce que** l'assemblage entre des plaques (1, 2, 3, 4) contiguës comprend au moins une fermeture à levier de serrage (110, 111, 112).

7. Disposition de réflecteurs d'éclairage selon l'une quelconque des revendications 1 à 6, **caractérisée en ce que** pour l'assemblage des plaques (1, 2, 3, 4), il est prévu au centre ou là où les coins de quatre plaques se rejoignent deux plaques métalliques (11, 14) entre lesquelles se trouvent les coins des plaques et qui peuvent être serrées ensemble.

8. Disposition de réflecteurs d'éclairage selon la revendication 7, **caractérisée en ce que** les plaques (1, 2, 3, 4) sont biseautées à tous les angles et **en ce que** les plaques métalliques (11, 14) peuvent être serrées ensemble par un boulon fileté central (12) et une douille taraudée (16).

9. Disposition de réflecteurs d'éclairage selon la revendication 7 ou 8, **caractérisée en ce qu'**une plaque métallique (11) possède huit tenons (13) qui se mettent en prise lorsque quatre coins de plaques se rejoignent dans les huit trous (7) correspondants dans les coins des plaques (1, 2, 3, 4) et **en ce que** l'autre plaque métallique (11) possède des trous (15) alignés avec les tenons (13).

10. Disposition de réflecteurs d'éclairage selon l'une quelconque des revendications 7 à 9, **caractérisée en ce que** l'une au moins des plaques métalliques (11, 14) possède un moyen (16, 17 ; 18, 19) pour l'assemblage avec la tête d'un pied d'appareil et/ou la fixation d'autres accessoires.
